# EUROPEAN PATENT SPECIFICATION

(11) **EP 2 037 602 B1**
(45) Date of publication and mention of the grant of the patent: **18.08.2010**
(21) Application number: 07116093.1
(22) Date of filing: 11.09.2007
(51) Int. Cl.: H04J 3/06, G06F 1/14

(54) **System and method for supervising a plurality of oscillators in a network**
System und Verfahren zur Überwachung mehrer Oszillatoren in einem Netzwerk
Système et procédé pour la supervision d'une pluralité d'oscillateurs dans un réseau

(43) Date of publication of application: 18.03.2009
(73) Proprietor: Alcatel-Lucent USA Inc., Murray Hill, NJ 07974-0636 (US)
(72) Inventor: Ruether, Markus, 91448, Emskirchen (DE); Zitzmann, Michael, 91056, Erlangen (DE); Wolf, Guenter, Lothar, 90409, Nuernberg (DE)
(74) Representative: Schmidt, Werner Karl

(56) References cited:
- EP-A- 0 899 904
- EP-A- 1 209 850
- DE-A1- 3 638 947
- US-A- 3 662 277
- US-A1- 2002 131 370
- US-A1- 2004 062 280
- YAMADA Y ET AL: "Hardware-based precise time synchronization on Gb/s ethernet" GLOBAL TELECOMMUNICATIONS CONFERENCE, 2005. GLOBECOM '05. IEEE ST. LOIUS, MO, USA 28 NOV.-2 DEC. 2005, PISCATAWAY, NJ, USA,IEEE, 28 November 2005 (2005-11-28), pages 152-156, XP010881277 ISBN: 0-7803-9414-3

## Description

The present invention relates to a system and method for supervising a plurality of free-running oscillators in a network, in particular a telecommunications network. The invention is preferably applied to the supervision of wireless base station oscillators.

For proper operation, telecommunication equipment in general and wireless base stations in particular requires a highly accurate frequency. That frequency is usually generated by an oscillator and then distributed throughout the unit to drive the communications interface and generation of any radio frequency required. Depending on the actual application, the frequency accuracy and stability of the system oscillator is required to be accurate and stable over time.

As any other unit, an oscillator may experience failures, ranging, amongst others from small offsets in frequency over frequency instabilities (jitter, wander or drift or, in general, oscillations of the output frequency) to catastrophic failures where no meaningful output signal is generated at all. While the latter can be detected quite easily, detecting a small offset or wander is difficult for free-running oscillators as they are, by definition, the frequency normal in the network equipment. However, as an oscillator working within the specification is of paramount importance for meeting the RF requirements, it is necessary to detect such failures as soon as possible, to initiate appropriate corrective actions and potentially alarm the operator.

For instance, the frequency accuracy of a base station oscillator is crucial to a wireless network as oscillators being even slightly off frequency can lead to interrupted operation up to total failure of the base station operation. This can result in island cells, i.e. cells where no handover is possible, or so called sleeping cells, i.e. cells appearing normal at the management interface, but not carrying any traffic. In addition, such oscillator being off frequency can lead to violation of the required RF spectrum boundaries and/or signal characteristics, thereby violating legal requirements and/or interfering with other users of the RF spectrum.

A prior art approach to solve this problem is to add an additional oscillator to the base station and compare their output frequencies. The basic idea here is to compare the output signals of the two (or more) units and declare one of them defective if the frequencies differ by more than a certain threshold. In such a case an alarm could be raised and the base station taken out of service immediately. In such a situation it is, however, impossible to decide which of the two oscillators is faulty, as only the offset between the two can be measured. In addition, it requires that both oscillators are of roughly the same accuracy and frequency stability. This makes this solution expensive as a second oscillator is required. Further, two units can fail instead of one, basically doubling the chance of a failure. In addition, the footprint, weight and power consumption of such a base station increases.

Another prior art approach is to discipline the oscillator by a 'known good' reference clock. This can be either the backhaul network, in particular when it is traceable to a highly accurate and stable primary reference clock (e.g. STRATUM 1) or a clock distribution service like GPS, GLONASS or, in the future, GALILEO. Disciplining the oscillator by a 'known good' reference is a well known and commonly used practice. The basic shortcoming of this approach is that such a reference must be available at the location of the oscillator to be disciplined.

One prior art approach is to use the backhaul system as reference clock. However, for actually driving an oscillator with sufficient accuracy for generating proper RF signals, the requirements towards the backhaul network frequency stability are quite stringent. These requirements are not always met. For example, they may be violated in case of equipment failures in intermediate network elements or when the operator decides against the use of a highly accurate primary reference clock in his transmission network. One should note that the functionality of the transmission network is usually ensured even when the clocks of that network are not very stable or off frequency by a significant amount. While at least some transmission network standards allow signaling the accuracy of the network clock to a downstream user, such mechanisms are not universally available and often not (correctly) implemented by the transmission systems. In addition, using such a system would require taking complete clusters of base stations or even wireless networks off air when the frequency of the backhaul network becomes unstable, e.g. because the primary reference clock failed.

Alternatively, a GPS receiver is used in the prior art as reference clock. This approach requires a GPS receiver with the associated antenna installation at every base station. While GPS is highly accurate and the approach is well known, it is rather costly. First, a GPS receiver and antenna cabling needs to be purchased for each base station and needs to be installed. This obviously is expensive and requires additional antennas at the site, which might increase the rent and or even excludes some sites from being used, e.g. arranged in tunnels. Installing additional antennas is also increasingly difficult due to public objections. It also increases the operational costs as additional equipment is installed that can fail and needs to be replaced, and the additional equipment also consumes additional power.

EP1209850 discloses a system of synchronizing the real time clocks of network elements in a network. For performance monitoring purposes it is essential that the real time clock values of the network elements do not deviate more than 5 seconds from the real time clock value for the Element Management System. EP1209850 teaches that in order to determine the real time drift between the Element Management System and a network element, the mean round trip time from the element Management System to the respective network element needs to be taken into consideration.

DE3638947 discloses a method of clock synchronization. For synchronization purposes each clock sends out synchronization signals to all other clocks and constantly compares and updates its clock value to the other clock values based on the received synchronization signals. Each clock independently performs the synchronization of its clock by comparing the plurality of received synchronization signals with its own clock value.

The known approaches described above have the common shortcoming of being expensive in installation and/or management and/or not being practical in some situations.

Thus, there is a need for an efficient and reliable supervision of distributed oscillators in a network, in particular a telecommunications network.

It is an object of the present invention to overcome the above deficiencies of the prior art. It is a further object of the invention to provide an efficient method and system for supervising a plurality of distributed oscillators.

This object is achieved by the independent claims. The dependent claims refer to preferred embodiments of the invention.

According to an aspect of the invention, a method for supervising a plurality of oscillators comprises the steps of: distributing a reference clock to each of the plurality of oscillators, or receiving a reference click at each of the oscillators; measuring the offset between the frequency of each oscillator and the frequency of the reference clock; and correlating the frequency offsets of the plurality of oscillators to determine whether one or more of the oscillators operate(s) with a frequency which is different from a nominal frequency.

According to another aspect of the invention, a system for supervising a plurality of oscillators in a network comprises a reference clock for generating a reference clock signal; clock distribution means for distributing the reference clock signal in the network; measuring means for measuring the oscillator offsets by determining the difference between the oscillator frequencies and the frequency of the reference clock signal; and a control unit correlating the frequency offsets of the plurality of oscillators to determine whether an oscillator operates with a frequency which is different from a nominal frequency.

The present invention allows remote supervision of the frequency accuracy of otherwise uncontrolled oscillators. Such oscillators are common in telecommunication systems, like, but not limited to, UMTS radio access networks. The invention is, however, not restricted to telecommunication systems and can be applied in any network comprising distributed oscillators.

This invention provides a means to detect oscillator failures in near real-time with normal operational methods. This reduces operational costs and potential fines and/or compensation payments.

The invention allows using an unstable reference clock supplied by the ubiquitous backhaul network in a telecommunication network and correlating frequency offset measurements for detecting faulty equipment. Through correlation of multiple, highly accurate, clocks against a less accurate reference clock supplied to them, a supervision of the accurate clocks is possible by comparing their relative drift to the other clocks in the network.

Preferably, the frequency offset to the frequency of the backhaul network of each oscillator is reported to an upstream network entity. The upstream entity, such as an operation and maintenance center of the network, analyses the reports to supervise the operation of the oscillators and the distributed equipment in the network in which the oscillators are located, e.g. wireless base stations. According to an embodiment, communication means for transmitting the oscillator offsets from the oscillators that are distributed in network equipment to a network operations and maintenance center are provided. Preferably, the oscillator offsets are transmitted in oscillator offset reports to the upstream network entity.

The frequency offsets may be sorted according to their respective offset value to identify an oscillator operating with a non-nominal frequency. In general, all oscillators operating at the nominal frequency will have a similar offset to the reference frequency which can be less accurate than the oscillators as it is only used as frequency reference. This allows to detect an oscillator having a different offset than the others which indicates that the frequency of this oscillator is off, e.g. because the oscillator is faulty.

According to an aspect of the invention, the backhaul network is used as a common time reference for a cluster of base stations. The frequency of the oscillator in each base station is compared against that time reference. The difference between the oscillator frequency and the frequency of the network clock is then reported to an upstream network entity, e.g. the operations and maintenance center (OMC), where the reports from all base stations in the same cluster are compared. A cluster of base stations in that context may be defined as the base stations that are connected to the same part of the backhaul network, e.g. the same switch or interconnected switches running on the same timing reference. In other words, the base stations of a cluster receive the same reference clock signal as timing base against which they compare their oscillator frequency to determine their respective frequency offset.

The report from a single base station is not meaningful by itself, as the same uncertainty arises as in the case where two oscillators are compared. A difference may indicate that either the oscillator or the network or both are off frequency. Even if there is no difference in the report, it is possible that both timing sources exhibit the same error, albeit unlikely. However, the accumulation of a multitude of reports from different base stations generates a useful result. When all oscillators are running on their nominal frequency (the normal case), all base stations would report the same offset between the network reference and their respective oscillator. When an oscillator is faulty, it would have a different offset in frequency to the backhaul network. This can be detected through the correlation and an appropriate fault defense, like, but not limited to, an alarm for the appropriate base station being generated and presented to the operations team who in turn could initiate corrective actions. This works independently on the quality, frequency and/or stability of the backhaul network clock as the network clock is only used for establishing a common time base. Samples from intervals where the backhaul network clock failed may be discarded to avoid false alarms. Obviously, the accuracy and reliability of the mechanism increases with the number of base stations associated with a cluster.

One should further note that such a cluster may either be configured manually or detected automatically through basically the same mechanism, i.e. by comparing the reported offsets of all base stations in the network and clustering those showing the same offset behavior. This allows identifying, in large networks with a plurality of reference clocks such as network switches, clusters of oscillators that receive a reference clock signal from the same source. As the frequency of the backhaul network usually drifts over time, such drifts can be used for defining the actual cluster to which a particular base station belongs. For instance, base stations which show similar drifts are clustered as these base stations very likely receive the same reference clock signal.

Clustering in this context means that a set of base stations is grouped together and all measurement reports of these base stations are collected and evaluated by a dedicated supervising entity that tries to identify single failed oscillators in this cluster. Each such cluster needs to have its own supervising entity. Defining such a cluster of base stations can be done manually by using the clock distribution network topology. All base stations attached to the same reference clock are assumed to report the same offset behavior. As this is what the supervising entity is expecting, all reports from this cluster of base stations should be reported to the same supervising entity. An automated approach could be to have a single entity collecting all measurements from all base stations throughout the network. This entity may use mutual cross-correlation to identify which base stations belong to the same clock domain. All cross-correlation values of base stations that belong to the same clock domain should be in a similar range as the deviation of the reference clock should have similar effect on the offset reports from these base stations. Upper and lower thresholds can be determined from the cross-correlation mean and standard deviation. Once the single entity identifies a significant cross-correlation on a group of base station measurement reports, it may create a supervising entity and assign the detected base stations to this entity for supervision.

The proposed mechanism can detect clock failures of reference oscillators in a base station without the use of additional hardware, like a second oscillator or a GPS receiver, or the need for establishing new processes for work group interactions. It is a cost effective solution to detecting such failures. The accuracy achievable by the solution depends on the size of the cluster and the sampling time. It is independent from the actual quality of the reference clock, e.g. the backhaul clock.

The present invention is illustrated in reference to the following figures showing preferred embodiments. It must be noted, however, that the invention is not limited to the disclosed embodiments and may be implemented in many other ways.
- Fig. 1: shows schematically a network configuration to illustrate the present invention.
- Fig. 2: shows schematically an embodiment of the present invention.

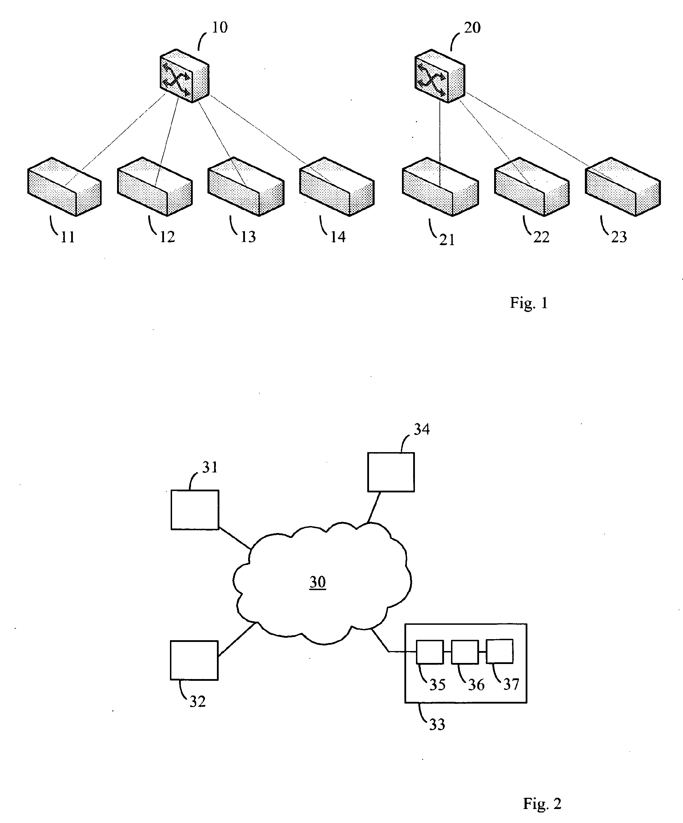

Fig. 1 shows a network comprising a first switch 10 serving four base stations (BS) 11 to 14, and a second switch 20 serving three base stations 21 to 23. Each base station 11-14, 21-23 has a highly accurate oscillator while each network switch 10, 20 supplies a less accurate, but common timing signal to all base stations connected to it.

Each base station 11-14, 21-23 measures the difference between the clock speeds of the internal oscillator and the timing signal from the network and reports the difference to a central node which is aware of the network topology (e.g. the Operations and Maintenance Center, OMC).

From the point of view of a single base station, a difference between the timings can be due to the oscillator of the base station being defective, the network frequency being off its nominal value (may or may not be within the specification) or a combination thereof.

A central node compares the reported offsets from all base stations connected to the same network clock segment which is a segment of the network that receives the timing signal from the same source. If the network topology is a tree, the network clock segments of the network may be trees, too.

If the difference reported by the base stations is (roughly) the same for all base stations, the offset is due to the network timing being off the nominal frequency which may be within or outside the specification.

If the difference reported by a base station is different to the value reported by other base stations, the oscillator of that base station standing out is off frequency. An alarm for that component may be raised to the network/base station operator.

According to an aspect of the invention, thresholds based on offset mean and standard deviation may be applied to identify faulty oscillators. This approach is illustrated in the following: First, frequency offsets from all base stations are measured over some initial time. Then, upper and lower thresholds from the standard deviation and mean value of those initial measurements are determined. A base station that reports continuously offsets below or above the thresholds is assumed to be off frequency. Standard deviation, mean, upper and lower thresholds should be adapted continuously by discarding old measurement values and taking new ones into account. This will ensure necessary adaptations of the thresholds due to reference clock drifts.

According to another aspect of the invention, a cross-correlation of measurements is applied to identify faulty oscillators. If the reference clock drift over time is slow compared to the rate of the measurement reports, it may be possible to mutually cross-correlate time interpolated measurement reports from all base stations. All cross-correlation values should be in a similar range as the deviation of the reference clock should have similar effect on the offset reports from all base stations. Upper and lower thresholds can be determined from the cross-correlation mean and standard deviation in this case as well. Once a base stations oscillator starts deviating from the nominal frequency, it is expected that the mutual cross-correlation values between this base station measurements and all others exceeds the defined thresholds. In addition to the above threshold approach based on mean and standard deviation, this solution may also be used to identify degrading oscillators in an early stage when they slowly drift away from their nominal frequency. The above approaches to correlate frequency offsets are only exemplary illustrations for the processing of offsets and many other offset correlations are possible as well to identify defective oscillators.

### The invention is further explained by the following example:

Let the nominal clock speeds be 1kHz for all oscillators and network clocks. Let the first switch 10 be off frequency at 1,005Hz and the second switch 20 at 998Hz. Let the OMC know that base stations 11 to 14 are connected to the first switch 10 and base stations 21 to 23 are connected to the second switch 20. Let all oscillators be at the nominal frequency, except the one of BS 12 being at 950Hz.

Then all base stations 21-23 connected to the second switch 20 would report an offset of -2Hz. All base stations (except BS 12) connected to the first switch 10 would report an offset of +5Hz. BS 12 would report an offset of +55Hz. With this knowledge, the OMC can derive that BS 12 - having a different offset than the other base stations 11, 13, 14 connected to the first switch 10 - has a faulty oscillator and can take appropriate action on this.

Fig. 2 shows an embodiment of the invention where two network entities 32, 33, e.g. base stations, are connected to a network 30. A reference clock generator 31 generates a reference clock signal which is distributed to the network entities 32, 33 via the network 30, e.g. a telecommunications network. Each network entity 32, 33 comprises a communications unit 35, a frequency offset measuring unit 36, and an oscillator 37 (shown only for network entity 33). The communications unit 35 receives the reference clock signal from the reference clock 31 via the telecommunications network 30.

In case of network reference clocking, the reference clock signal may be recovered from the physical layer of the network, so no dedicated signaling is used. In most cases, a base station has a local oscillator that locks with a PLL to the physical layer clock as it is provided by its peer. Thus the base station is "slave" regarding the physical link clocking, and it recovers the clock from the received data on physical layer level. For instance, a framer chip provides in case of E1/T1 a fraction of this recovered clock signal on an output pin, and that clock may be used in the base station as reference clock (8kHz frame sync pulse). Similar clock recovering applies for other synchronous interfaces e.g. STMx/OCx, etc.

It must be noted, however, that the present invention uses the recovered network clock as reference clock to generate frequency offsets, unlike the prior art where the recovered network clock is used to discipline the oscillator by imposing the network clock on it. Thus, when in the present invention the recovered network clock is not precise (i.e. is off frequency and/or exhibits drift or wander), the frequency offsets of the oscillators receiving the same clock signal all behave similarly, while the oscillators in the prior art would be mis-adjusted.

It is further to be noted that oscillators operating at a higher frequency (e.g. several MHz or GHz) can be supervised with the present invention where a lower frequency reference clock (e.g. 8 KHz) is derived from the network. According to an embodiment, the reference clock is input to a counter which generates a gate signal for a pre-determined time period (e.g. one second). The gate signal is applied to a second counter which counts the cycles of the high frequency oscillator during this time period. The difference between the counted cycles and an expected nominal cycle value is then considered as offset value for the oscillator. Since all oscillators generate their respective gate signal from the same reference clock signal, inaccuracies in the reference signal will affect all offset values uniformly.

The communications unit 35 provides the reference clock to the frequency offset measuring unit 36 which further receives the local oscillator clock signal from the oscillator 37. The frequency offset measuring unit 36 determines the difference (offset) between the reference clock frequency and the oscillator frequency. The frequency offset is then provided to the communications unit 35 which sends a frequency offset report via the telecommunications network 30 to a control unit 34. The communications unit 35 can use whatever communications protocol is provided by the telecommunications network 30 to transmit the frequency offset reports to the control unit 34. If the telecommunications network 30 can carry packet data traffic, the communications unit 35 sends the offset report as data message to the control unit 34.

Base stations usually have a dedicated communication path to an OMC (Operations, Administration and Control center), which is a good choice for the clock supervising entity in the UMTS UTRAN case. This path may be used to send the offsets in messages. The underlying protocols and layers may be IPoA, TCP, UDP, SNMP, etc. Thus, the offset reports may be sent via a packet network to the clock supervising entity.

The control unit 34 analyses the frequency offsets of all network units 32, 33 that are connected to the same reference clock 31, i.e. that receive the same reference clock signal. Control unit 34 correlates the received frequency offsets to determine whether they show all more or less the same behavior (i.e. a similar offset). If the offset of one network entity differs significantly from the others, one can reasonably assume that the oscillator of that network entity is off frequency, e.g. faulty. Fig. 2 shows only 2 network units 32, 33 for keeping the example and the figure simple. However, this approach is more accurate the more network entities submit offset reports to the control unit 34 for correlation analysis. Thus, preferred embodiments usually have more than the shown 2 network entities 32, 33.
The concept of the present invention is not limited to wireless networks, but can be applied to other networks where a distributed timing signal is less accurate than the signal required at the network leafs.

## Claims

1. Method for supervising the frequency of a plurality of oscillators (37) designed for operation with a nominal frequency, comprising the steps of:
receiving a reference frequency at each of the plurality of oscillators (37);
measuring the offset between the frequency of each oscillator (37) and the reference frequency; and
correlating the frequency offsets of the oscillators (37) to determine whether one or more of the oscillators (37) operate(s) with a frequency that is different from the nominal frequency.

2. Method of claim 1, wherein the accuracy of the reference frequency is lower than the accuracy of the oscillators (37).

3. Method of claim 1, wherein the oscillators (37) are arranged in distributed network equipment in a telecommunications network (30).

4. Method of claim 3, comprising the step of reporting the frequency offset of each oscillator (37) to an upstream network entity where the frequency offsets are compared to each other.

5. Method of claim 1, wherein the frequency offsets are sorted according to their respective value to identify an oscillator (37) operating with a non-nominal frequency.

6. Method of claim 1, comprising the step of comparing the offsets of all oscillators (37) in a network (30) and clustering those showing the same offset behavior to identify oscillators (37) that receive the same reference frequency.

7. System for supervising the frequencies of a plurality of oscillators (37) designed for operation with a nominal frequency in a network (30), comprising:
a reference frequency generator (31) for generating a reference frequency signal;
frequency distribution means for distributing the reference frequency signal in the network (30);
measuring means for measuring oscillator offsets by determining the difference between the oscillator frequencies and the reference frequency of the reference frequency signal; and
a control unit (34) for correlating the frequency offsets of the oscillators (37) to determine whether an oscillator (37) operates with a frequency that is different from the nominal frequency.

8. System of claim 7, wherein the network (30) is a telecommunications network and the oscillators (37) are arranged in wireless base stations.

9. System of claim 7, comprising communication means (35) for transmitting the oscillator offsets from the oscillators.(37) that are distributed in the network (30) to a network operations and maintenance center.

10. System of claim 7, wherein the reference frequency is provided by a backhaul network clock.

## Patentansprüche

1. Verfahren zur Überwachung der Frequenz einer Mehrzahl von Oszillatoren (37), welche für den Betrieb mit einer Nennfrequenz ausgelegt sind, wobei das Verfahren die folgenden Schritte umfasst:
Empfangen einer Referenzfrequenz an einem jeden einer Mehrzahl von Oszillatoren (37);
Messen des Versatzes zwischen der Frequenz eines jeden Oszillators (37) und der Referenzfrequenz; und
Korrelieren der Frequenzversatzwerte der Oszillatoren (37), um zu ermitteln, ob ein oder mehrere Oszillator(en) (37) mit einer sich von der Nennfrequenz unterscheidenden Frequenz arbeitet/arbeiten.

2. Verfahren nach Anspruch 1, wobei die Genauigkeit der Referenzfrequenz niedriger ist als die Genauigkeit des Oszillators (37).

3. Verfahren nach Anspruch 1, wobei die Oszillatoren (37) in verteilten Netzwerkvorrichtungen in einem Telekommunikationsnetzwerk (30) angeordnet sind.

4. Verfahren nach Anspruch 3, umfassend den Schritt des Auswertens des Frequenzversatzes eines jeden Oszillators (37) im Verhältnis zu einer Upstream-Netzwerkentität, wobei die Frequenzversatzwerte miteinander verglichen werden.

5. Verfahren nach Anspruch 1, wobei die Frequenzversatzwerte gemäß ihrem jeweiligen Wert sortiert werden, um einen Oszillator (37) zu identifizieren, der mit einer Frequenz arbeit, die keine Nennfrequenz ist.

6. Verfahren nach Anspruch 1, umfassend den Schritt des Vergleichens der Versatzwerte aller Oszillatoren (37) in einem Netzwerk (30) und des Zusammenfassens solcher, die ein selbes Versatzverhalten aufweisen, um Oszillatoren (37) zu identifizieren, die dieselbe Referenzfrequenz empfangen.

7. System zur Überwachung der Frequenzen einer Mehrzahl von Oszillatoren (37), welche für den Betrieb mit einer Nennfrequenz in einem Netzwerk (30) ausgelegt sind, umfassend:
Einen Referenzfrequenzgenerator (31) zum Erzeugen eines Referenzfrequenzsignals;
Frequenzverteilungsmittel zum Verteilen des Referenzfrequenzsignals im Netzwerk (30);
Messmittel zum Messen der Versatzwerte der Oszillatoren durch Ermitteln der Differenz zwischen der Frequenz eines jeden Oszillators und der Referenzfrequenz des Referenzfrequenzsignals; und
eine Steuerungseinheit (34) zum Korrelieren der Frequenzversatzwerte der Oszillatoren (37), um zu ermitteln, ob ein Oszillator (37) mit einer sich von der Nennfrequenz unterscheidenden Frequenz arbeitet.

8. System nach Anspruch 7, wobei das Netzwerk (30) ein Telekommunikationsnetzwerk ist und die Oszillatoren (37) in drahtlosen Basisstationen angeordnet sind.

9. System nach Anspruch 7, umfassend Kommunikationsmittel (35) zum Übertragen der Versatzwerte der Oszillatoren von den Oszillatoren (37), welche im Netzwerk (30) verteilt sind, an eine Netzwerkbetriebs- und -wartungszentrale.

10. System nach Anspruch 7, wobei die Referenzfrequenz von einem Backhaul-Netzwerk-Dock bereitgestellt wird.

## Revendications

1. Procédé de supervision de la fréquence d'une pluralité d'oscillateurs (37) conçus pour fonctionner à une fréquence nominale, comprenant les étapes suivantes :
Réception d'une fréquence de référence sur chaque oscillateur de la pluralité d'oscillateurs (37) ;
Mesure du décalage entre la fréquence de chaque oscillateur (37) et la fréquence de référence ; et
Corrélation des décalages en fréquence des oscillateurs (37) pour déterminer si un ou plusieurs des oscillateurs (37) fonctionnent avec une fréquence qui est différente de la fréquence nominale.

2. Procédé selon la revendication 1, dans lequel la précision de la fréquence de référence est inférieure à la précision des oscillateurs (37).

3. Procédé selon la revendication 1, dans lequel les oscillateurs (37) sont disposés dans un équipement de réseau distribué au sein d'un réseau de télécommunications (30).

4. Procédé selon la revendication 3, comprenant l'étape de signalisation du décalage en fréquence de chaque oscillateur (37) à une entité de réseau en amont où les décalages en fréquence sont comparés les uns aux autres.

5. Procédé selon la revendication 1, dans lequel les décalages en fréquence sont triés conformément à leurs valeurs respectives pour identifier un oscillateur (37) fonctionnant à une fréquence non nominale.

6. Procédé selon la revendication 1, comprenant l'étape de comparaison des décalages de tous les oscillateurs (37) dans un réseau (30) et de regroupement de ceux qui présentent le même comportement de décalage en vue d'identifier les oscillateurs (37) qui reçoivent la même fréquence de référence.

7. Système de supervision des fréquences d'une pluralité d'oscillateurs (37) conçus pour fonctionner à une fréquence nominale dans un réseau (30), comprenant :
un générateur de fréquence de référence (31) pour générer un signal de fréquence de référence ;
des moyens de distribution de fréquence pour distribuer le signal de fréquence de référence dans le réseau (30) ;
des moyens de mesure pour mesurer les décalages des oscillateurs en déterminant la différence entre les fréquences des oscillateurs et la fréquence de référence du signal de fréquence de référence ; et
une unité de commande (34) pour corréler les décalages en fréquence des oscillateurs (37) afin de déterminer si un oscillateur (37) fonctionne avec une fréquence qui est différente de la fréquence nominale.

8. Système selon la revendication 7, dans lequel le réseau (30) est un réseau de télécommunications et les oscillateurs (37) sont disposés dans des stations de base sans fil.

9. Système selon la revendication 7, comprenant des moyens de communication (35) pour transmettre les décalages d'oscillateur des oscillateurs (37) qui sont distribués dans le réseau (30) vers un centre d'exploitation et de maintenance du réseau.

10. Système selon la revendication 7, dans lequel la fréquence de référence est délivrée par une station d'accueil de réseau de raccordement.
